# EUROPEAN PATENT APPLICATION

(11) **EP 3 179 735 A1**
(43) Date of publication of application: **14.06.2017**
(21) Application number: 16202756.9
(22) Date of filing: 07.12.2016
(51) Int. Cl.: H04N 21/44, H04N 21/442, H04N 21/658

(54) **DISPLAY DEVICE AND METHOD FOR CONTROLLING THE SAME**

(30) Priority: 11.12.2015 KR 20150177011
(71) Applicant: Samsung Electronics Co., Ltd., Gyeonggi-do 16677 (KR)
(72) Inventor: Soh, Jae-min, Gyeonggi-do (KR); Sudakov, Sergei, Gyeonggi-do (KR); Lee, Ji-hyo, Gyeonggi-do (KR)
(74) Representative: Taor, Simon Edward William

(57) **Abstract**

A display device is provided, which includes an external inputter configured to receive an input of a video frame from an external device, a display configured to display the video frame, a memory, and a processor configured to determine a type of the video frame, to extract information on video content that is included in the video frame through analysis of the video frame in accordance with the determined type of the video frame, and to store the extracted information on the video content in the memory as viewing history information.

## Description

The present disclosure relates to a display device and a method for controlling the same, and more particularly to a display device and a method for controlling the same, which can acquire user's viewing history information through direct analysis of video or audio.

With the development of electronic technology, various kinds of display devices, which have diverse functions in accordance with user's requirements, have been developed and spread. Accordingly, a user can view various kinds of content through various kinds of display devices including a TV.

In addition, services have been provided to recommend content for a user or to provide an advertisement through grasping of a content viewing history of the user who uses a display device. In order to provide such services using the user's viewing history, it is essential to acquire user's display device viewing history information.

For this, in the related art, a method for grasping user's viewing history based on a user's input through a remote controller or an inputter provided on the display device has been used. In this case, however, viewing history information that can be acquired is limited.

Accordingly, technology to acquire user's viewing history information through direct analysis of a video of content being reproduced on the basis of a display device has recently been proposed. However, since the technology in the related art acquires the viewing history information in a manner that a template for screen configuration is pre-secured and information is extracted through comparison of the template with video frames being displayed, it becomes difficult to acquire the viewing history information from the screen configuration that is newly created or changed.

Accordingly, there has been a need for technology that can acquire viewing history information of a user of a display device through direct analysis of video and audio of content without template information.

Additional aspects and/or advantages will be set forth in part in the description which follows and, in part, will be apparent from the description, or may be learned by practice of the embodiments.

Exemplary embodiments of the present disclosure overcome the above disadvantages and other disadvantages not described above, and provide a display device and a method for controlling the same, which can acquire user's viewing history information in accordance with a type of a video frame.

According to an aspect of the present disclosure, a display device includes an external inputter configured to receive an input of a video frame from an external device; a display configured to display the video frame; a memory; and a processor configured to determine a type of the video frame, to extract information on video content that is included in the video frame through analysis of the video frame in accordance with the determined type of the video frame, and to store the extracted information on the video content in the memory as viewing history information.

The type of the video frame may include a VOD (Video On Demand) UI (User Interface) screen, an OSD (Screen Display) screen of a linear broadcast, and a video content screen.

The processor may determine whether the input video frame corresponds to the VOD UI screen using a machine learning technique that applies at least one of information on rectangles and information on characters that are included in the video frame as a feature.

The external inputter may receive an audio signal from the external device, and the processor may determine whether the input video frame corresponds to the VOD UI screen by applying a zero-crossing rate of the audio signal and an intensity of the audio signal to the machine learning technique as additional features.

The processor may detect a distribution pattern of characters included in a plurality of video frames that are input for a predetermined time through analysis of the plurality of video frames, and may determine whether the video frame corresponds to the OSD screen of the linear broadcast on the basis of the detected pattern.

The processor may extract information on the video content from the VOD UI screen or the OSD screen of the linear broadcast through OCR (Optical Character Recognition).

If the video frame does not correspond to the VOD UI screen or the OSD screen of the linear broadcast, the processor may determine that the input video frame corresponds to the video content screen, determine information on the video content that is recently extracted on the basis of the current time as information on the video content that is included in the video frame, and store the determined information on the video content in the memory as the viewing history information.

The display device may include a communicator configured to receive a video frame from a VOD content providing server, and the processor may determine whether the received video frame corresponds to the VOD UI screen using a machine learning technique that applies the number of rectangles and the number of characters that are included in the received video frame if the video frame is received from the VOD content providing server, and may extract the information on the video content that is included in the video frame through analysis of the video frame if it is determined that the received video frame corresponds to the VOD UI screen.

If it is determined that the received video frame does not correspond to the VOD UI screen, the processor may determine that the video frame corresponds to the video content screen, determine information on the video content that is recently extracted on the basis of the current time as information on the video content that is included in the video content screen, and store the determined information on the video content in the memory as the viewing history information.

According to another aspect of the present disclosure, a method for controlling a display device includes receiving an input of a video frame from an external device; determining a type of the video frame; extracting information on video content that is included in the video frame through analysis of the video frame in accordance with the determined type of the video frame; and storing the extracted information on the video content as viewing history information.

The type of the video frame may include a VOD (Video On Demand) UI (User Interface) screen, an OSD screen of a linear broadcast, and a video content screen.

The determining the type of the video frame may determine whether the input video frame corresponds to the VOD UI screen using a machine learning technique that applies at least one of information on rectangles and information on characters that are included in the video frame as a feature.

The method for controlling a display device may further include receiving an audio signal from the external device, wherein the determining the type of the video frame may determine whether the input video frame corresponds to the VOD UI screen by applying a zero-crossing rate of the audio signal and an intensity of the audio signal to the machine learning technique as additional features.

The determining the type of the video frame may include detecting a distribution pattern of characters included in a plurality of video frames that are input for a predetermined time through analysis of the plurality of video frames; and determining whether the video frame corresponds to the OSD screen of the linear broadcast on the basis of the detected pattern.

The extracting the information on the video content may extract information on the video content from the VOD UI screen or the OSD screen of the linear broadcast through OCR (Optical Character Recognition).

The determining the type of the video frame may further include determining that the input video frame corresponds to the video content screen if the video frame does not correspond to the VOD UI screen or the OSD screen of the linear broadcast; and determining information on the video content that is recently extracted on the basis of the current time as information on the video content that is included in the video frame, and the storing may store the determined information on the video content as the viewing history information.

The method for controlling a display device may further include receiving a video frame from a VOD content providing server through execution of a VOD application that is installed in the display device, the determining the type of the video frame may determine whether the received video frame corresponds to the VOD UI screen using a machine learning technique that applies the number of rectangles and the number of characters that are included in the received video frame as features if the video frame is received from the VOD content providing server, and the extracting the information on the video content may extract the information on the video content that is included in the video frame through analysis of the video frame if it is determined that the received video frame corresponds to the VOD UI screen.

The determining the type of the video frame may determine that the video frame corresponds to the video content screen if it is determined that the received video frame does not correspond to the VOD UI screen, the method for controlling a display device may further include determining information on the video content that is recently extracted on the basis of the current time as information on the video content that is included in the video content screen, and the storing may store the determined information on the video content as the viewing history information.

According to still another aspect of the present disclosure, a computer readable recording medium including a program for executing a method for controlling a display device, wherein the method for controlling a display device includes receiving an input of a video frame from an external device; determining a type of the video frame; extracting information on video content that is included in the video frame through analysis of the video frame in accordance with the determined type of the video frame; and storing the extracted information on the video content as viewing history information.

According to the various embodiments of the present disclosure, viewing history information of a user of a display device can be acquired through direct analysis of video and audio of content without template information.

Additional and/or other aspects and advantages of the disclosure will be set forth in part in the description which follows and, in part, will be obvious from the description, or may be learned by practice of the disclosure.

The above and/or other aspects of the present disclosure will be more apparent by describing certain exemplary embodiments of the present disclosure with reference to the accompanying drawings, in which:
FIG. 1 is a block diagram illustrating the configuration of a display device according to an exemplary embodiment of the present disclosure;
FIG. 2 is a block diagram illustrating the detailed configuration of a display device according to another exemplary embodiment of the present disclosure;
FIG. 3, including (a)-(c), is an exemplary diagram illustrating a VOD UI screen and a VOD content screen according to an exemplary embodiment of the present disclosure;
FIG. 4, including (a) and (b), is an exemplary diagram illustrating an OSD screen of a linear broadcast and a linear broadcast content screen according to an exemplary embodiment of the present disclosure; and
FIG. 5 is a flowchart explaining a method for controlling a display device according to an exemplary embodiment of the present disclosure.

Reference will now be made in detail to the embodiments, examples of which are illustrated in the accompanying drawings, wherein like reference numerals refer to the like elements throughout. The embodiments are described below by referring to the figures.

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope of the present disclosure.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In describing the present disclosure, well-known related technologies are not described in detail since they would obscure the disclosure in unnecessary detail. Further, all terms used in the description are terms that are defined in consideration of their functions in the present disclosure, and may differ depending on intentions of a user or an operator or customs. Accordingly, they should be defined on the basis of the contents of the whole description of the present disclosure.

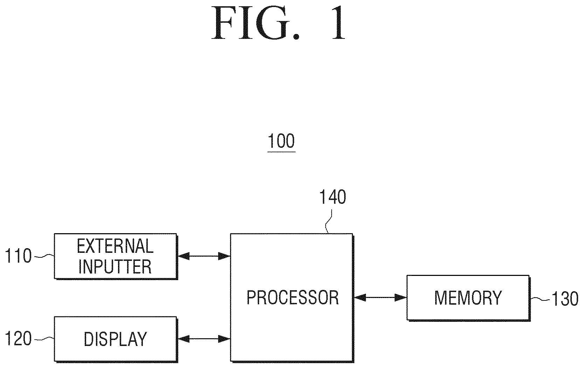

Hereinafter, various embodiments of the present disclosure will be described in detail with reference to the accompanying drawings. FIG. 1 is a block diagram illustrating the configuration of a display device according to an exemplary embodiment of the present disclosure.

Referring to FIG. 1, a display device 100 according to an embodiment of the present disclosure includes an external inputter 110, a display 120, a memory 130, and a processor 140. The display device 100 may be implemented by various electronic devices, such as a TV, a monitor, a portable phone, an electronic frame, an electronic board, an electronic table, an LFD (Large Format Display), a tablet, and a notebook computer.

The external inputter 110 may receive an input of video and audio signals from an external device. In this case, the external device may be at least one of a cable broadcasting set-top box, an IPTV set-top box, a satellite broadcasting set-top box, an OTT (Over The Top) dedicated device, a video game console, and a storage medium player, such as a CD or DVD player.

Specifically, the external inputter 110 may receive an input of video frames of content that is provided through the external device, and an audio signal of the content.

For this, the external inputter 110 may include at least one interface that satisfies various kinds of standards, such as composite, S Video (Separate Video), component, D-Sub, HDMI, DVI (Digital Visual Interface), and S/PDIF (Sony Philips Digital Interface).

The display 120 displays various videos under the control of the processor 140. In particular, the display 120 may display video frames that are input from the external device through the external inputter 110. For this, the display 110 may be implemented by various types of displays, such as LCD (Liquid Crystal Display), OLED (Organic Light Emitting Diodes), and PDP (Plasma Display Panel), but is not limited thereto in embodiments of the invention.

The memory 130 stores various programs and data for operation of the display device 100. In particular, to be described later, information on video content that is extracted by the processor 140 may be stored in the memory 130 as viewing history information. Here, the viewing history information is information on user's viewing history of content that is viewed through the display device 100, and may include at least one of content search history information, content zapping history information, and content viewing history information.

For this, the memory 130 may include various kinds of RAMs, ROMs, and flash memories, but is not limited thereto in embodiments of the invention. Storage media, such as HDD (Hard Disk Drive), SSD (Solid State Drive), and CD, may also be included in the category of the memory 130.

The processor 140 controls the overall operation of the display device 100. In particular, the processor 140 may control the display 120 to display video frames included in a video signal through processing of the video signal that is input through the external inputter 110.

Further, the processor 140 may determine the type of the video frame that is input through the external inputter 110. In this case, the type of the video frame may include at least one of a VOD (Video On Demand) UI (User Interface) screen, an OSD screen of a linear broadcast, and a video content screen.

That is, the processor 140 may determine whether the input video frames correspond to a VOD UI screen for searching, selecting, and viewing VOD content that is bidirectional content, an OSD screen of a linear broadcast for manually viewing content that is one-sidedly transmitted by a broadcasting service provider, or a video content screen for indicating the VOD content or the linear broadcasting content itself. Here, the OSD screen of the linear broadcast means a screen that includes OSD information, such as channel number, channel name, broadcasting station name, and content title, which is displayed on a specific region of the linear broadcasting screen.

For example, if the video frame is input from the external device, the processor 140 may determine whether the input video frame corresponds to the VOD UI screen. Specifically, the processor 140 may determine whether the input video frame corresponds to the VOD UI screen using a machine learning technique that applies at least one of information on rectangles and information on characters that are included in the video frame as a main feature.

Here, the information on rectangles may include at least one of the number of rectangles included in the video frame and distribution of the rectangles. Further, the information on characters may include at least one of the number of characters included in the video frame and distribution of the characters.

In this case, according to an embodiment of the present disclosure, the processor may determine whether the input video frame corresponds to the VOD UI screen by applying a zero-crossing rate of the audio signal that is input through the external inputter 110 and an intensity of the audio signal to the machine learning technique as additional features.

Further, if the video frame is input from the external device, the processor 140 may determine whether the input video frame corresponds to the OSD screen of the linear broadcast. Specifically, the processor 140 may detect a distribution pattern of characters included in a plurality of video frames that are input for a predetermined time through analysis of the plurality of video frames, and may determine whether the video frame corresponds to the OSD screen of the linear broadcast on the basis of the detected distribution pattern. In this case, the processor 140 may detect the character distribution pattern by applying OCR (Optical Character Recognition) to the plurality of video frames that are input for the predetermined time, but is not limited thereto in embodiments of the invention.

Further, the processor 140 may detect a region in which a pixel value change is within a predetermined range for the plurality of video frames through analysis of the plurality of video frames that are input for a predetermined time, and may determine whether each of the plurality of video frames is the OSD screen of the linear broadcast on the basis of information on the detected region.

However, determination of whether the video frame corresponds to the OSD screen of the linear broadcast is not limited thereto in embodiments of the invention. It is also possible that the processor 140 determines whether each of the plurality of video frames is the OSD screen of the linear broadcast using information on a distribution pattern of characters detected from the plurality of video frames and information on the region in which the pixel value change is within the predetermined range together.

For example, if it is determined that the input video frame does not correspond to the VOD UI screen, the processor 140 may determine whether the distribution of the characters included in each of the video frames has a predetermined pattern for the plurality of video frames through analysis of each of the plurality of video frames that are input for the predetermined time. Accordingly, if or when the distribution of the characters has the predetermined pattern, the processor 140 may determine that the corresponding video frames correspond to the OSD screen of the linear broadcast.

Further, if or when it is determined that the input video frame does not correspond to the VOD UI screen, the processor 140 may determine whether there exists a region in which the pixel value change does not occur for the plurality of video frames through analysis of each of the plurality of video frames that are input for the predetermined time. Accordingly, if or when there exists a region in which the pixel value change does not occur for the plurality of video frames, the processor 140 may determine that the corresponding video frames correspond to the OSD screen of the linear broadcast.

In this case, the predetermined time may be a predetermined time starting from a time point where channel switching occurs. For example, the predetermined time may be a time that is equal to or shorter than a specific time in which OSD information of the linear broadcast is displayed during the channel change, but is not limited thereto in embodiments of the invention.

On the other hand, it is exemplified that the analysis is made with respect to the plurality of video frames that are input for the predetermined time, but is not limited thereto in embodiments of the invention. The processor 140 may determine whether the video frame corresponds to the OSD screen of the linear broadcast through analysis of the predetermined number of video frames from the time when the channel switching occurs.

Further, it is exemplarily determined whether the plurality of input video frames correspond to the OSD screen of the linear broadcast, but is not limited thereto in embodiments of the invention. For example, the processor 140 may learn the OSD region through a predetermined number of times of channel switching, for example, channel switching about 5 to 15 times, and may determine whether the subsequently input video frame corresponds to the OSD screen of the linear broadcast on the basis of the result of learning.

For example, the processor 140 may store information on the OSD region through the predetermined number of times of learning, and if a video frame is input thereafter, the processor 140 may determine whether the corresponding video frame corresponds to the OSD screen of the linear broadcast through determination of whether an OSD region exists in the corresponding video frame.

Further, if or when a video frame is input from the external device, the processor 140 may determine whether the input video frame corresponds to a video content frame, such as a VOD content screen or a linear broadcasting content screen. Specifically, if or when the video frame does not correspond to the VOD UI screen or the OSD screen of the linear broadcast as the result of determining the type of the video frame as described above, the processor 140 may determine the corresponding video frame as the video content screen.

If or when the type of the video frame is determined as described above, the processor 140 may extract information on the video content that is included in the video frame through analysis of the video frame in accordance with the determined type of the video frame.

Specifically, if or when it is determined that the video frame corresponds to the VOD UI screen, the processor 140 may extract information on at least one piece of VOD content included in the video frame by applying various kinds of video analysis methods or OCR to the corresponding video frame. In this case, information on the VOD content that is extracted from the VOD UI screen may include title information of VOD content and genre information, but is not limited thereto in embodiments of the invention.

Further, if or when it is determined that the video frame corresponds to the OSD screen of the linear broadcast, the processor 140 may extract information on linear broadcasting content from the screen region of the video frame that indicates a predetermined character distribution pattern. In this case, the information on the linear broadcast that is extracted from the OSD screen of the linear broadcast may include title information of the linear broadcasting content, channel number information, channel name information, and broadcasting station name information, but is not limited thereto in embodiments of the invention.

In the case where it is determined that the video frame corresponds to the OSD screen of the linear broadcast, the character information has already been extracted from the plurality of video frames by applying the OCR when it is determined whether the video frame corresponds to the linear OSD screen, and according to embodiments, the processor 140 may use the character information that is extracted when it is determined whether the video frame corresponds to the OSD screen of the linear broadcast.

On the other hand, if or when it is determined that the video frame corresponds to the video content screen, the processor 140 may determine the information on the video content that was most recently extracted as information on the video content included in the video frame. That is, if or when it is determined that the video frame corresponds to the video content screen, the processor 140 does not extract the information on the video content from the corresponding video frame, but may determine the information on the video content that was most recently extracted on the basis of the current time as information on the video content included in the current video frame, that is, the current video content screen.

If or when the information on the video content is extracted or determined in accordance with the determined type of the video frame, the processor 140 may store the extracted or determined information on the video content in the memory 130 as the viewing history information.

Specifically, since the video frame that is input from the external device is displayed on the display 120, the processor 140, from the standpoint of the display device 100, may store the information on the VOD content that is extracted through analysis of the VOD UI screen in the memory 130 as VOD content search history information or VOD content viewing history information. Further, the processor 140 may store the information on the linear broadcasting content that is extracted through analysis of the OSD screen of the linear broadcast in the memory 130 as content zapping history information or linear broadcasting content viewing history information.

In this case, according to an embodiment of the present disclosure, the processor 140 may determine the number of pieces of extracted or determined information on the video content, and may store the information on the predetermined number of pieces of video content or more as the content viewing history information.

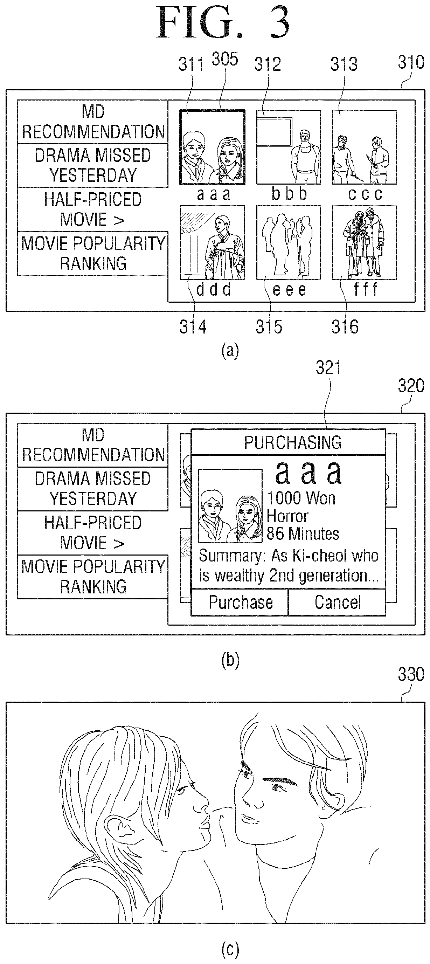

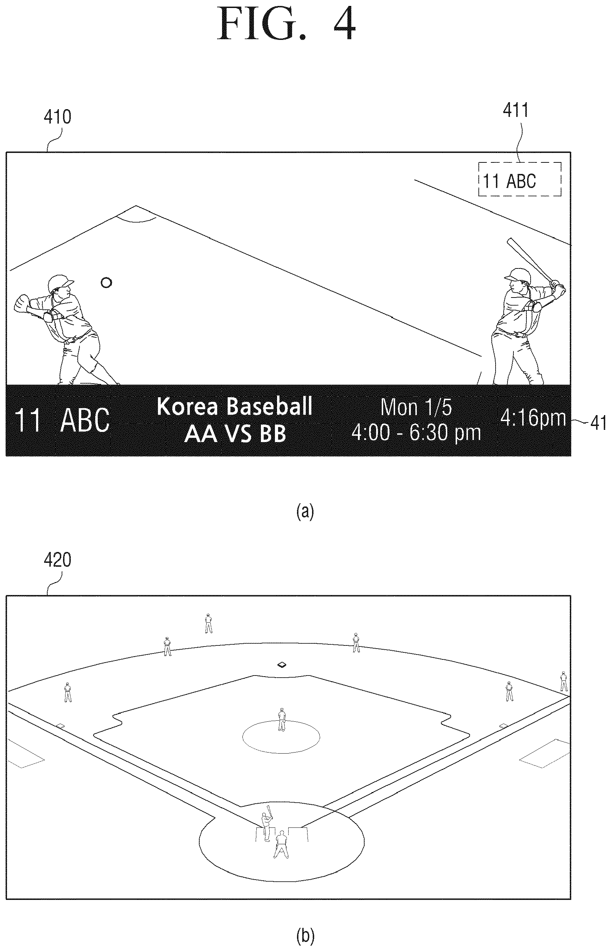

The contents that the processor 140 stores the extracted or determined information on the video content in the memory 130 as the viewing history information will be described in detail later through FIGS. 3 and 4.

Accordingly, the processor 140 may provide a user with various service screens, such as content recommendation services or advertisement services, using the viewing history information that is stored in the memory 130.

According to the various embodiments of the present disclosure as described above, even if the screen configuration is changed, such as the external device is changed, or a video frame having a new screen configuration is input as described above, the viewing history information of the display device user can be acquired by directly analyzing video and audio of the content without template information.

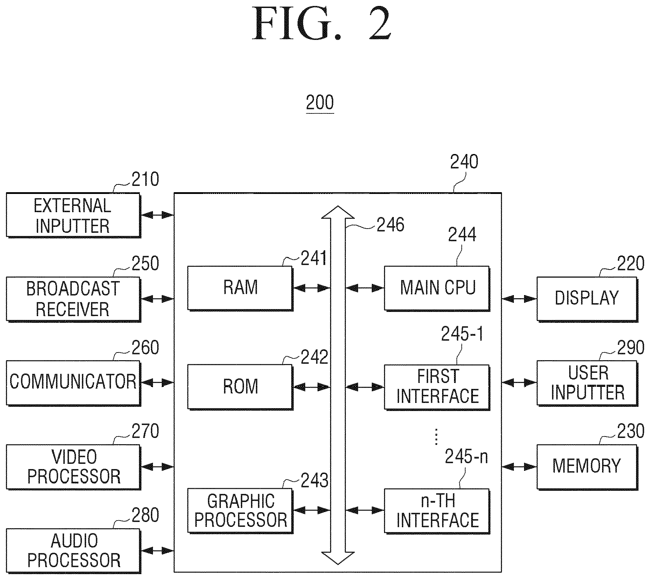

FIG. 2 is a block diagram illustrating the detailed configuration of a display device according to another exemplary embodiment of the present disclosure.

Referring to FIG. 2, a display device 200 includes an external inputter 210, a display 220, an audio outputter (not illustrated), a memory 230, a processor 240, a broadcast receiver 250, a communicator 260, a video processor 270, an audio processor 280, and a user inputter 290. In explaining FIG. 2, the duplicate explanation of the same configuration as the configuration of FIG. 1 will be omitted.

The broadcast receiver 250 receives a broadcasting signal that corresponds to a channel selected by a user from a broadcasting station. In particular, the broadcast receiver 250 may change the channel in accordance with a user's channel change command through the user inputter 290 to receive a broadcasting signal of the changed channel. In this case, the received broadcasting signal may include a video signal, an audio signal, and an additional signal. In particular, the video signal may include a video frame that includes a linear broadcasting OSD screen and a linear broadcasting content screen, and the additional signal may include EPG (Electronic Program Guide) information. For this, the broadcast receiver 250 may include a tuner.

The communicator 260 performs communication with the external device in accordance with various types of communication methods. In particular, the communicator 260 may be connected to an external server through a network, such as Internet, to transmit or receive various kinds of information. For example, the communicator 260 may be connected to an external VOD content providing server to receive a video frame including the VOD UI screen and the VOD content screen from the VOD content providing server. Further, the communicator 260 may receive the EPG information of the broadcasting content from the server that provides broadcasting content related metadata, such as the EPG information.

For this, the communicator 260 may include at least one of a short-range wireless communication module (not illustrated) and a wireless LAN communication module (not illustrated). Here, the short-range wireless communication module (not illustrated) is a communication module that performs wireless data communication with the external device that is located in a short distance, and may be, for example, a Bluetooth module, a ZigBee module, or an NFC (Near Field Communication) module. Further, the wireless LAN communication module (not illustrated) is a module that is connected to an external network in accordance with a wireless communication protocol, such as WiFi or IEEE, to perform communication. In addition, the communicator 260 may further include a mobile communication module that is connected to a mobile communication network in accordance with various mobile communication standards, such as 3G (3rd Generation), 3GPP (3rd Generation Partnership Project), and LTE (Long Term Evolution). Further, the communicator 260 may include at least one of wired communication modules (not illustrated), such as USB (Universal Serial Bus), IEEE (Institute of Electrical and Electronics Engineers) 1394, and RS-232.

The video processor 270 is configured to process a video signal that includes a video frame that is received through the external inputter 210, the broadcast receiver 250, or the communicator 260. The video processor 270 may perform various video processes, such as decoding of a video signal, scaling, noise filtering, frame rate conversion, and resolution conversion. The video frame that is processed as described above may be displayed on the display 220.

The audio processor 280 is configured to process an audio signal that is received through the external inputter 210, the broadcast receiver 250, or the communicator 260. The audio processor 280 may perform various processes, such as audio signal decoding, amplification, and noise filtering. The audio signal that is processed by the audio processor 280 may be output through an audio outputter (not illustrated)

The audio outputter (not illustrated) is configured to output various kinds of audio signals, various kinds of notification sound, or voice messages, which are processed by the audio processor 280, and may be implemented by a speaker or the like.

The user inputter 290 may receive various kinds of user commands for controlling the operation of the display device 200. In particular, the user command inputter 290 may receive an input of various user commands, such as a user command for selecting a source that provides the video content, a user command for selecting video content that is desired to be viewed among the plurality of pieces of video content provided through the selected source, and a user command for displaying the selected video content.

For example, a user may view the VOD content or linear broadcasting content provided from the external device through selection of the external inputter 210 through the user inputter 290, may receive the VOD content that is provided by the VOD content providing server through the communicator 260 through execution of a VOD application installed in the display device 200, or may directly receive and view the linear broadcasting content through selection of the broadcast receiver 250 without passing through the external device.

For this, the user inputter 290 may be implemented by various input devices that can control the display device 200, such as buttons, a touch panel, or a remote controller.

The memory 230 stores therein various programs and data for the operation of the display device 200. For example, the memory 230 may store various kinds of programs for the operation of the display device 200 in the form of modules, such as a base module, a sensing module, a communication module, a presentation module, a web browser module, and a service module. In this case, the base module is a base module that processes signals that are transferred from various pieces of hardware included in the display device 200 and transfers the processed signals to an upper layer module. The sensing module is a module that collects information from various kinds of sensors and analyzes and manages the collected information, and may include a face recognition module, speech recognition module, a motion recognition module, and an NFC recognition module. The presentation module is a module for configuring a display screen, and may include a multimedia module for reproducing and outputting multimedia content and a UI rendering module that performs UI and graphic processing. The communication module is a module for performing communication with an outside. The web browser module means a module that accesses a web server though performing web browsing. The service module is a module that includes various kinds of applications for providing various services. In particular, the service module may include a VOD application for providing VOD content or a recommendation application for recommending a user various kinds of content on the basis of the viewing history information that is stored in the memory 230.

In particular, the memory 230 may store therein a video frame type determination module that determines types of various kinds of video frames that are provided from an external device, a broadcasting station, or a VOD content providing server and a video content information extraction module that extracts information on the video content through analysis of the video frame in accordance with the determined type of the video frame.

On the other hand, the various kinds of program modules may be partially omitted, modified, or added in accordance with the kind and characteristic of the display device 200. For example, if the display device 200 as described above is implemented by a tablet PC, the base module may further include a location determination module for determining the GPS-based location, and the sensing module may further include a sensing module for sensing a user's operation.

The memory 230 may store therein information like the information that is stored in the memory 130 of FIG. 1. On the other hand, the memory 230 of FIG. 2 may be a storage medium, such as a flash memory, HDD (Hard Disk Drive), SSD (Solid State Drive), or CD provided on the outside of the processor 240, other than the RAM or ROM included in the processor 240.

The processor 240 controls the overall operation of the display device 200 using various kinds of programs and data stored in the memory 230.

As illustrated in FIG. 2, the processor 240 includes a RAM 241, a ROM 242, a graphic processor 243, a main CPU 244, first to n-th interfaces 245-1 to 245-n, and a bus 246. In this case, the RAM 241, the ROM 242, the graphic processor 243, the main CPU 244, and the first to n-th interfaces 245-1 to 245-n may be connected to each other through the bus 246.

In the ROM 242, a set of commands for system booting is stored. If a turn-on command is input to supply a power, the main CPU 244 copies the OS stored in the memory 230 to the RAM 241, and executes the OS to boot the system in accordance with the commands stored in the ROM 242. If the booting is completed, the main CPU 244 copies various kinds of application programs stored in the storage 230 to the RAM 241, and executes the application programs copied to the RAM 241 to perform various kinds of operations.

The graphic processor 243 generates a screen that includes various objects, such as icons, images, and texts, using an operator (not illustrated) and a renderer (not illustrated). The operator operates attribute values, such as coordinate values, shapes, sizes, and colors of the objects to be displayed in accordance with the layout of the screen using a control command that is received from the user command inputter 290. The renderer generates a screen of various layouts including the objects on the basis of the attribute values operated by the operator. The screen generated by the renderer is displayed in a display region of the display 220.

The main CPU 244 accesses the memory 230 and performs booting using the OS stored in the memory 230. Further, the main CPU 244 performs various operations using various kinds of programs, content, and data stored in the memory 240.

The first to n-th interfaces 245-1 to 245-n are connected to the various kinds of constituent elements as described above. One of the first to n-th interfaces may become a network interface that is connected to an external device through a network.

In particular, the processor 240 may determine the type of the video frame that is input through the external inputter 210. In this case, the type of the video frame may be at least one of a VOD (Video On Demand) UI screen, an OSD screen of a linear broadcast, and a video content screen.

The processor 240 may determine whether the video frame corresponds to the VOD UI screen by applying a machine learning technique to the video frame. Specifically, the processor 240 may determine whether the video frame corresponds to the VOD UI screen by combining an HMM (Hidden Markov Model) and an SVM (Support Vector Machine).

In this case, since the VOD UI screen is different from the OSD screen of another linear broadcast or the video content screen on the point that a plurality of vertical and horizontal rectangles exist in the screen and the number of characters is large, the processor 240 may determine whether the corresponding video frame corresponds to the VOD UI screen by applying the number or distribution of rectangles and the number or distribution of characters in the screen to the machine learning technique as main features.

Further, since audios are mostly processed in bundles when the VOD UI screen is displayed, the processor 240 may determine whether the corresponding video frame corresponds to the VOD UI screen by applying a zero-crossing rate of the audio signal that is input together with the video frame or the intensity of the audio signal to the machine learning technique as additional features.

If it is determined that the video frame corresponds to the VOD UI screen as the result of the determination, the processor 240 may extract information on various pieces of video content included in the video frame through analysis of the corresponding video frame. For example, the processor 240 may extract title information or genre information of at least one piece of VOD content that is included in the VOD UI screen through OCR recognition of the corresponding video frame, but is not limited thereto in embodiments of the invention.

On the other hand, if it is determined that the input video frame does not correspond to the VOD UI screen as the result of the determination, the processor 240 may determine whether the corresponding video frame corresponds to the OSD screen of the linear broadcast. Specifically, the processor 240 may detect the distribution pattern of characters included in the respective video frames through analysis of the plurality of video frames that are input for a predetermined time including the video frame that is determined not to correspond to the current VOD UI screen, and may determine whether the video frame corresponds to the OSD screen of the linear broadcast on the basis of the detected character distribution pattern.

For example, the processor 240 may determine whether the characters in the respective video frames have a predetermined distribution pattern through OCR recognition of the plurality of video frames that are input for the predetermined time, and if the characters have the predetermined pattern, the processor 240 may determine the corresponding video frames as the OSD screen of the linear broadcast. However, if the characters that are included in the plurality of video frames do not have the predetermined distribution pattern, the processor 240 may determine the corresponding video frames as the video content screen.

As described above, in the case of determining whether the video frame corresponds to the OSD screen of the linear broadcast, unlike the case where it is determined whether the video frame corresponds to the VOD UI screen, the processor 240 analyzes the plurality of video frames that are input for the predetermined time. This is because in the case of determination through only one video frame, for example, in the case where the video content screen is an advertisement screen that includes many texts, it is difficult to discriminate between the OSD screen of the linear broadcast and the video content screen.

However, the above-described determination is not limited thereto in embodiments of the invention, and as described above, in the case where the information on the OSD region has been acquired through several times channel switching in advance, it is not necessary to use a plurality of video frames in order to determine whether the input video frame corresponds to the OSD screen of the linear broadcast. In this case, the processor 240 may determine whether the video frame that is determined not to correspond to the VOD UI screen corresponds to the OSD screen of the linear broadcast by determining whether the video frame includes the OSD region.

If it is determined that the video frame corresponds to the OSD screen of the linear broadcast as the result of the determination, the processor 240 may extract the characters included in the predetermined character distribution pattern region of the plurality of video frames that is input for the predetermined time as information on the linear broadcasting content. In this case, the information on the linear broadcasting content may include title information of the linear broadcasting content, channel number information, channel name information, and broadcasting station name information, but is not limited thereto in embodiments of the invention.

On the other hand, if it is determined that the video frame corresponds to the video content screen, the processor 240 may determine the information on the video content that was most recently extracted on the basis of the current time when the video frame is determined to correspond to the video content screen as information on the video content included in the current video content screen.

If the information on the video content is extracted or determined as described above, the processor 240 may store the extracted or determined information on the video content in the memory 230 as the viewing history information.

On the other hand, according to an embodiment of the present disclosure, the video frame may be received from an external VOD content server through the communicator 260 other than the external inputter 210. For example, the user may view the VOD content through execution of the VOD application that is stored in the memory 230 of the display device 200 other than the external device.

In this case, if the video frame is received from the VOD content server, the processor 240, like a case where the video frame is input through the above-described external device, may determine whether the corresponding video frame corresponds to the VOD UI screen. Accordingly, if it is determined that the video frame corresponds to the VOD UI screen, the processor 240 may extract information on at least one piece of VOD content that is included in the video frame through analysis of the video frame that is determined to correspond to the VOD UI screen, and may determine the extracted information on the VOD content as information on the VOD UI screen.

The video frame that is received from the VOD content server corresponds to one of VOD UI and VOD content screens, and if it is determined that the received video frame does not correspond to the VOD UI screen, the processor 240 may determine the corresponding video frame as the VOD content screen. Accordingly, the processor 240 may determine the information on the VOD content that was most recently extracted on the basis of the current time as information on the VOD content included in the video frame that is determined to correspond to the current VOD content screen, and may store the determined information on the VOD content in the memory 230 as the viewing history information.

On the other hand, according to another embodiment of the present disclosure, the video frame may be received through the broadcast receiver 250. For example, the user may view the broadcasting content of the corresponding channel by selecting the channel of the broadcasting signal, which is received through the broadcast receiver 250, through the user inputter 290.

In this case, if the video frame is received from the broadcast receiver 250, the processor 240 may acquire information on the broadcasting content that is currently displayed on the display 220 using selection information through which the user has selected the channel through the user inputter 290 and EPG (Electronic Program Guide) information, and may store the acquired information on the broadcasting content in the memory 230 as the viewing history information. In this case, the acquired information on the broadcasting content may be all pieces of information that can be acquired through the EPG information, such as title information of the corresponding broadcasting content, channel number information, broadcasting station name information, and broadcasting time information.

On the other hand, the EPG information may be included in the broadcasting signal to be acquired through the broadcast receiver 250 together with the broadcasting content, or may be separately acquired from an external server that provides the EPG information through the communicator 260.

On the other hand, FIG. 2 synthetically illustrates various kinds of constituent elements in the case where, for example, the display device 200 has various functions, such as communication function, broadcast reception function, moving image reproduction function, and display function. According to embodiments, a part of the constituent elements as illustrated in FIG. 2 may be omitted or modified, and other constituent elements may be further added.

As described above, the user may select and view VOD content that is input through a VOD application that operates at self-platform of the display device 200, VOD content that is input through an external device, or linear broadcasting content through the user inputter 290, and in this case, the processor 240 may determine the type of the video frame that is input in each case, and may acquire user's viewing history information through analysis of the video frame in accordance with the determined type.

Hereinafter, referring to FIGS. 3 and 4, the operation of the processor 240 will be described in more detail. FIG. 3 is an exemplary diagram illustrating a VOD UI screen and a VOD content screen according to an exemplary embodiment of the present disclosure. Specifically, (a) and (b) of FIG. 3 exemplarily indicate VOD UI screens, and (c) of FIG. 3 exemplarily indicates a VOD content screen.

In this case, the VOD UI screen and the VOD content screen may be input from an external device through the external inputter 210, or may be received from a VOD content providing server through the communicator 260 in accordance with an execution of a VOD application that is installed in the display device 200.

Hereinafter, for convenience in explanation, a case where a video frame is received from the VOD content providing server through the communicator 260 in accordance with the execution of the VOD application that is installed in the display device 200 will be exemplarily described.

For example, in the case where the user views the VOD content that is provided from the VOD content providing server through the communicator 260, the VOD UI screen may be displayed on the display 220, and the VOD content that is selected by the user may be displayed on the VOD UI screen.

That is, if a video frame 310, on which any one of a plurality of pieces of VOD content can be selected, is input through the external inputter 210 as shown as (a) in FIG. 3, the processor 240 may determine whether the corresponding video frame corresponds to the VOD UI screen through analysis of the input video frame through a machine learning technique.

As shown as (a) in FIG. 3, it can be seen that the VOD UI screen has a large number of rectangles or characters provided in the video frame. According to an embodiment of the present disclosure, the processor 240 may apply the number or distribution of rectangles and the number or distribution of characters as main features of a machine learning technology, such as HMM or SVM, and thus may determine the video frame 310 as shown as (a) in FIG. 3 as the VOD UI screen.

As described above, if it is determined that the video frame corresponds to the VOD UI screen, the processor 240 may extract information on the video content through analysis of the corresponding video frame, that is, the corresponding VOD UI screen. For example, the processor 240 may extract information on the video content through OCR recognition of the VOD UI screen, but is not limited thereto in embodiments of the invention. That is, the processor 240 may extract title information aaa to fff of 6 pieces of VOD content 311 to 316 through analysis of the video frame 310 as shown as (a) in FIG. 3.

In this case, the processor 240 may extract the information on the VOD content through analysis of information, such as location, size, and thickness of rectangles and characters, on the VOD UI screen, but is not limited thereto in embodiments of the invention. In extracting the information on the VOD content included in the VOD UI screen, various methods may be used.

On the other hand, if the user selects the VOD content 311 having the title of aaa on the VOD UI screen as shown as (a) in FIG. 3, a video frame 320 including detailed information on the selected content and a UI 321 capable of determining whether to purchase may be displayed as shown as (b) in FIG. 3. In this case, the processor 240 determines again whether a new video frame 320 corresponds to the VOD UI screen. Also, as shown as (b) in FIG. 3, the VOD UI screen has a large number of rectangles or characters, and thus the processor 240 may determine the input video frame as the VOD UI screen. Accordingly, the processor 240 may extract information on the VOD content, that is, title information aaa, through analysis of the video frame 320 as shown as (b) in FIG. 3.

If the user decide to purchase the VOD content aaa on the VOD UI screen being displayed, the screen of the content aaa is displayed as shown as (c) in FIG. 3. In this case, the processor 240 determines whether the input video frame 330 corresponds to the VOD UI screen. As shown as (c) in FIG. 3, since the VOD content screen is unable to have the feature of the VOD UI screen, the processor 240 may determine that the corresponding video frame does not correspond to the VOD UI screen.

If it is determined that the video frame does not correspond to the VOD UI screen, the processor 240 may determine the corresponding video frame to correspond to the VOD content screen. This is because the video frame that is received through the communicator 260 has only two types of the VOD UI screen and the VOD content screen in the case where the VOD content is provided from the VOD content providing server.

As described above, if it is determined that the video frame does not correspond to the VOD UI screen, the processor 240 may determine that the corresponding video frame corresponds to the video content screen, and may determine the information on the video content that was most recently extracted on the basis of the current time as information on the video content included in the video content screen.

That is, if a video frame 330 as shown as (c) in FIG. 3 is input and it is determined that the corresponding video frame corresponds to the VOD content screen, the processor 240 may determine the title information aaa that is the information on the VOD content that was most recently extracted on the basis of the current time as the information on the VOD content included in the current VOD content screen.

On the other hand, according to another embodiment of the present disclosure, the VOD content need not be directly provided from the VOD content providing server through the communicator 260, but may be provided from an external device through the external inputter 210. In this case, since the external device may provide not only the VOD content but also the linear broadcasting content, the processor 240, even if the video frame as shown as (c) in FIG. 3 is input and it is determined that the video frame does not correspond to the VOD UI screen, does not immediately determine that the corresponding video frame corresponds to the VOD content screen, but may further determine whether the corresponding video frame corresponds to the OSD screen of the linear broadcast through analysis of a plurality of video frames that are input for a predetermined time. In this case, if it is determined that the corresponding video frame does not correspond to the OSD screen of the linear broadcast, the corresponding video frames correspond to the video content screen.

Accordingly, if it is determined that the corresponding video frame corresponds to the video content screen, the processor 240 may determine the information on the video content that was most recently extracted on the basis of the current time as the information on the video content included in the current video frame.

That is, in the case where the video frames are input in the order as shown as an example in FIG. 3, the processor 240 may determine that the video frame 330 as shown as (c) in FIG. 3 corresponds to the video content screen, and may determine the title information aaa that is the information on the video content that was most recently extracted as the information on the video content included in the corresponding video frame 330.

Further, according to an embodiment, the processor 240 may determine the title information aaa that was most recently extracted as information on the video content included in the plurality of video frames analyzed to determine whether the video frame corresponds to the linear OSD screen.

On the other hand, the processor 240 may store information on the video content extracted or determined as described above in the memory 230 as the viewing history information. In this case, according to an embodiment of the present disclosure, the processor 240 may analyze the information on the video content extracted or determined as described above, and may store the corresponding information in the memory 230 as the content search history information or the content viewing history information.

Specifically, if the number of the same information among the extracted or determined information on the video content as described above is equal to or larger than a predetermined number, the processor 240 stores the corresponding information as the content viewing history information, whereas if the number of the same information is smaller than the predetermined number, the processor 240 may store the corresponding information in the memory 230 as the content search history information.

In the example of FIG. 3, since the user has intended to purchase and view the VOD content aaa, the video frames that are subsequently input correspond to all video content screens until the user stops viewing of the content aaa in order to search for another piece of VOD content on the VOD UI screen for viewing of another piece of content or to perform zapping of the channel of the linear broadcasting content. Further, if it is determined that the video frame corresponds to the video content screen, the title aaa that is the information on the video content that was most recently extracted is determined as the information on the video content included in the corresponding video frame, and thus the number of the same titles aaa among the information on the video content becomes largest. Accordingly, under this circumstance, the processor 240 may store the title aaa as the content viewing history information.

On the other hand, since the number of video frames of the VOD UI screen as shown as (a) in FIG. 3 is smaller than the number of video content screens due to the viewing of the video content, the processor 240 may store the information on the video content extracted from the VOD UI screen in the memory 230 as the content search history information. Further, if the user does not view the video content screen over a predetermined time even in the case where the video frame corresponds to the video content screen, the number of pieces of information on the same video content is smaller than the predetermined number, and thus this may be stored as the content search history information.

In this case, the predetermined number may be set in an experimental manner to discriminate between the content viewing history information and content search or zapping history information.

On the other hand, according to circumstances, if the VOD content is selected on the VOD UI screen as shown as (a) in FIG. 3, the VOD content screen as shown as (c) in FIG. 3 may be directly displayed without passing through the VOD UI screen as shown as (b) in FIG. 3. In this case, if the video frame as shown as (c) in FIG. 3 is input and is determined to correspond to the VOD content screen, the processor 240 may determine the information on the video content, on which highlight 305 is lastly located, among the information on the video content that was most recently extracted, that is, the title aaa, as the information on the VOD content included in the current video frame.

Hereinafter, referring to FIG. 4, the operation of the processor 240 will be described in the case where a user views the linear broadcasting content. FIG. 4 is an exemplary diagram illustrating an OSD screen of a linear broadcast and a linear broadcast content screen according to an exemplary embodiment of the present disclosure.

Here, unlike a VOD service that is a bidirectional service, the linear broadcast means a broadcasting service for a viewer to manually view the broadcasting content that is one-sidedly transmitted by a broadcasting service provider. Further, the OSD screen of the linear broadcast means a screen that includes OSD information, such as channel number, channel name, broadcasting station name, content title, and broadcasting time, which is displayed on a specific region of the screen among the video frames included in the linear broadcasting signal.

The OSD screen of the linear broadcast is displayed on a specific region of the display 220 for a predetermined time normally when the channel is changed. That is, for example, if the user changes the channel of the linear broadcast, video frames that are input from the external device for a predetermined time after the channel change are added with the OSD information provided on the specific region, and are input to the display device 200. In this case, the predetermined time or the specific region may differ depending on the external devices.

An example of the OSD screen of the linear broadcast that may be input to the external inputter 210 when the channel is changed as described above is shown as (a) in FIG. 4. That is, at the right upper end 411 and lower end 412 of the video frame 410 as shown as (a) in FIG. 4, information on various kinds of video content including the channel number and the channel name, such as "11" and "ABC", the title of the broadcasting content, such as "Korea Baseball AA vs BB", the broadcasting time, such as "Mon 1/5 4:00-6"30pm", and the current time, such as "4:16pm", may be displayed in the form of an OSD.

If a video frame 410 as shown as (a) in FIG. 4 is input through the external inputter 210 as described above, the processor 240 first determines whether the input video frame 410 corresponds to the VOD UI screen. Since the video frame 410 has the small number of rectangles or characters, the processor 240 may determine that the video frame 410 does not correspond to the VOD UI screen as described above.

If it is determined that the video frame 410 does not correspond to the VOD UI screen, the processor 240 determines whether the video frame corresponds to the OSD screen of the linear broadcast. Specifically, the processor 240 may detect a region 412 in which a pixel value change is within a predetermined range for the distribution pattern of characters included in each video frame or the plurality of video frames through analysis of the plurality of video frames that are input for a predetermined time, and if the detected character distribution has a predetermined pattern or a region in which there is no pixel value change is detected, the processor 240 may determine the corresponding video frame 410 or the plurality of video frames as the OSD screen of the linear broadcast.

As described above, since the video frames that are input for the predetermined time after the channel change are added with the OSD information that is provided on the specific region, the processor 240 may be aware that a predetermined character distribution pattern appears on the specific region at the right upper end through analysis of the respective video frames, such as OCR recognition of the respective video frames, and according to embodiments, the processor 240 may determine that at least one of the corresponding video frame 410 and the plurality of video frames that are input for the predetermined time corresponds to the OSD screen of the linear broadcast.

Accordingly, the processor 240 may extract the recognized characters, that is, "11", "ABC", and "Korea Baseball AA vs BB", in the region in which the characters are distributed in a predetermined pattern as information on the video content, and may store this as the viewing history information.

On the other hand, if a predetermined time elapses after the channel change, the OSD information does not appear any more on the linear broadcasting screen, and the linear broadcasting content screen as shown as (b) in FIG. 4 is input. If the video frame 420 as shown as (b) in FIG. 4 is input, the processor 240 determines whether the video frame 420 corresponds to the VOD UI screen. Since the video frame 420 has the small number of rectangles or characters, the processor 240 determines that the video frame 420 does not correspond to the VOD UI screen.

Accordingly, the processor 240 may determine whether the video frame 420 corresponds to the OSD screen of the linear broadcast through analysis of the video frame input for a predetermined time. Since there is not the predetermined character distribution pattern on the video frame 420 and the linear broadcasting content screens input for the predetermined time, the processor 240 may determine the video frame 420 and the plurality of video frames that are input for the predetermined time as the linear broadcasting content screen.

If it is determined that the video frame 420 and the plurality of video frames that are input for the predetermined time correspond to the linear broadcasting content as described above, the processor 240 may determine "11", "ABC", and "Baseball AA vs BB" that correspond to the information on the video content that was most recently extracted on the basis of the current time as information on the video frame 420 or the video content included in the plurality of video frames input for the predetermined time, and may store the determined video content, that is, information on the linear broadcasting content in the memory 230 as the viewing history information.

On the other hand, according to an embodiment of the present disclosure, the processor 240 may store the information on the linear broadcasting content as the viewing history information in a manner that if the number of the same information among the extracted or determined information on the video content as described above is equal to or larger than a predetermined number, the processor 240 stores the corresponding information as the content viewing history information, whereas if the number of the same information is smaller than the predetermined number, the processor 240 stores the corresponding information as the content zapping history information in the memory 230.

In the case where the user acquires the information on the video content according to embodiments of the present disclosure when selecting and viewing a specific channel after channel zapping, the number of pieces of information on the video content extracted and determined from the OSD screen of the viewing channel and the content screen is much larger than the number of pieces of information on the video content extracted and determined from the OSD screen of the zapping channel and the content screen, and thus it is possible to discriminate between the user's viewing history information and the zapping history information.

From the foregoing description, the processor 240 first determines whether the input video frame corresponds to the VOD UI screen, and if the input video frame does not correspond to the VOD UI screen, the processor 240 determines the corresponding video frame to correspond to the VOD content screen, or according to embodiments, the processor 240 further determines whether the corresponding video frame corresponds to the OSD screen of the linear broadcast. In this case, if the input video frame does not correspond to the OSD screen of the linear broadcast, the processor 240 determines the corresponding video frame as the VOD content screen or the content screen of the linear broadcast. However, determination of the type of the video frame is not limited thereto, and according to embodiments, the order of determining the type of the video frame may differ.

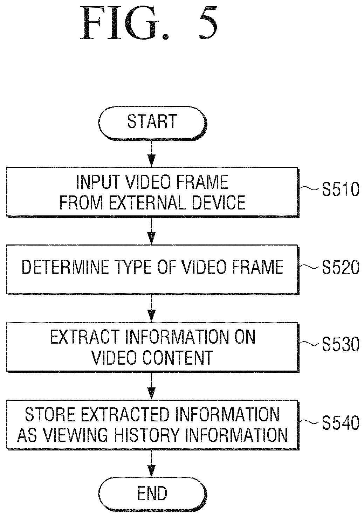

FIG. 5 is a flowchart explaining a method for controlling a display device according to an exemplary embodiment of the present disclosure. Referring to FIG. 5, if a video frame is input from an external device (S510), the display device 100 and 200 determines the type of the video frame (S520). In this case, the type of the video frame may include a VOD (Video On Demand) UI screen, an OSD screen of a linear broadcast, and a video content screen. Specifically, the display device 100 and 200 may determine whether the input video frame corresponds to the VOD UI screen using a machine learning technique that applies the number of rectangles and the number of characters included in the video frame as feature. In this case, the machine learning technique may use a combination of HMM (Hidden Markov Model) and SVM (Support Vector Machine), but is not limited thereto in embodiments of the invention.

Further, the display device 100 and 200 may further receive an input of an audio signal from the external device, and may determine whether the video frame corresponds to the VOD UI screen by applying a zero-crossing rate of the audio signal and the intensity of the audio signal to the machine learning technique as additional features.

Further, the display device 100 and 200 may detect the distribution pattern of characters included in a plurality of video frames through analysis of the plurality of video frames, and may determine whether the video frame corresponds to the OSD screen of the linear broadcast on the basis of the detected pattern.

Further, if the video frame does not correspond to the VOD UI screen and the OSD screen of the linear broadcast, the display device 100 and 200 may determine the video frame as a video content screen.

On the other hand, according to another embodiment of the present disclosure, if the video frame is received from the VOD content providing server in accordance with an execution of a VOD application installed on the display device 100 and 200, the display device 100 and 200 may determine whether the received video frame corresponds to the VOD UI screen using a machine learning technique that applies the number of rectangles and the number of characters that are included in the received video frame as features. In this case, if it is determined that the received video frame does not correspond to the VOD UI screen, the display device 100 and 200 may determine the video frame as the video content screen.

If the type of the video frame is determined, the display device 100 and 200 may extract or determine information on the video content included in the video frame through analysis of the video frame in accordance with the determined type of the video frame (S530).

Specifically, if it is determined that the video frame corresponds to the VOD UI screen or the OSD screen of the linear broadcast, the display device 100 and 200 may extract information on the video content from the VOD UI screen or the OSD screen of the linear broadcast through OCR (Optical Character Recognition), but is not limited thereto in embodiments of the invention. The information on the video content may be extracted from the VOD UI screen or the OSD screen of the linear broadcast by applying various video analysis techniques.

Further, if it is determined that the video frame does not correspond to the video content screen, that is, the VOD content screen or the linear broadcast content screen, the display device 100 and 200 may determine the information on the video content that was extracted most recently on the basis of the current time as the information on the video content included in the video content screen.

Accordingly, as described above, the display device 100 and 200 may store the extracted or determined information on the video content as the viewing history information (S540). In this case, the display device 100 and 200 may divide the extracted or determined information on the video content into content search history information, content zapping history information, and content viewing history information to store the divided information.

According to various embodiments as described above, the viewing history information of the user of the display device can be acquired through direct analysis of the video and audio of the video content that is input from various sources even without acquiring the template information in advance.

On the other hand, the operation of the controllers 140 and 240 of the display devices 100 and 200 and the methods for controlling the display device according to various embodiments as described above may be created by software and may be mounted on the display devices 100 and 200.

For example, a non-transitory computer readable storage medium may be provided to store therein a program for performing the method for controlling a display device that includes receiving an input of a video frame from an external device; determining a type of the video frame; extracting information on video content that is included in the video frame through analysis of the video frame in accordance with the determined type of the video frame; and storing the extracted information on the video content as viewing history information.

Here, the non-transitory computer readable medium is not a medium that stores data for a short period, such as a register, a cache, or a memory, but means a medium which semi-permanently stores data and is readable by a device. Specifically, the above-described programs may be stored and provided in the non-transitory computer readable medium, such as, a CD, a DVD, a hard disc, a Blu-ray disc, a USB, a memory card, and a ROM.

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

Although a few embodiments have been shown and described, it would be appreciated by those skilled in the art that changes may be made in these embodiments without departing from the principles thereof, the scope of which is defined in the claims and their equivalents.

## Claims

1. A display device, comprising:
an external inputter configured to receive an input of a video frame from an external device;
a display configured to display the video frame;
a memory; and
a processor configured to determine a type of the video frame, to extract information on video content included in the video frame through analysis of the video frame in accordance with a determined type of the video frame, and to store extracted information on the video content in the memory as viewing history information.

2. The display device as claimed in claim 1, wherein the type of the video frame comprises one of a VOD (Video On Demand) UI (User Interface) screen, an OSD screen of a linear broadcast, and a video content screen.

3. The display device as claimed in claim 2, wherein the processor determines whether an input video frame corresponds to the VOD UI screen using a machine learning technique that applies at least one of information on rectangles and information on characters included in the video frame as a feature.

4. The display device as claimed in claim 3, wherein the external inputter receives an audio signal from the external device, and
the processor determines whether the input video frame corresponds to the VOD UI screen by applying a zero-crossing rate of the audio signal and an intensity of the audio signal to the machine learning technique as additional features.

5. The display device of any one of claims 2 to 4, wherein the processor detects a distribution pattern of characters included in a plurality of video frames input over a predetermined time period through analysis of the plurality of video frames, and determines whether the video frame corresponds to the OSD screen of the linear broadcast on a basis of a detected pattern.

6. The display device of any one of claims 2 to 5, wherein the processor extracts information on the video content from one of the VOD UI screen and the OSD screen of the linear broadcast through OCR (Optical Character Recognition).

7. The display device of any one of claims 2 to 6, wherein when the video frame does not correspond to one of the VOD UI screen and the OSD screen of the linear broadcast, the processor determines that an input video frame corresponds to the video content screen, determines information on the video content recently extracted on a basis of a current time as information on the video content included in the video frame, and stores determined information on the video content in the memory as the viewing history information.

8. The display device of any one of claims 2 to 7, further comprising a communicator configured to receive the video frame from a VOD content providing server,
wherein the processor determines whether a received video frame corresponds to the VOD UI screen using a machine learning technique that applies a number of rectangles and a number of characters included in the received video frame when the video frame is received from the VOD content providing server, and extracts information on the video content included in the video frame through analysis of the video frame when it is determined that the received video frame corresponds to the VOD UI screen.

9. The display device as claimed in claim 8, wherein when it is determined that the received video frame does not correspond to the VOD UI screen, the processor determines that the video frame corresponds to the video content screen, determines information on the video content recently extracted on a basis of a current time as information on the video content included in the video content screen, and stores determined information on the video content in the memory as the viewing history information.

10. A method for controlling a display device, comprising:
receiving an input of a video frame from an external device;
determining a type of the video frame;
extracting information on video content included in the video frame through analysis of the video frame in accordance with a determined type of the video frame; and
storing extracted information on the video content as viewing history information.

11. The method as claimed in claim 10, wherein the type of the video frame comprises one of a VOD (Video On Demand) UI (User Interface) screen, an OSD screen of a linear broadcast, and a video content screen.

12. The method as claimed in claim 11, wherein the determining the type of the video frame determines whether an input video frame corresponds to the VOD UI screen using a machine learning technique that applies at least one of information on rectangles and information on characters included in the video frame as a feature.

13. The method as claimed in claim 12, further comprising receiving an audio signal from the external device,
wherein the determining the type of the video frame determines whether the input video frame corresponds to the VOD UI screen by applying a zero-crossing rate of the audio signal and an intensity of the audio signal to the machine learning technique as additional features.

14. The method of any one of claims 11 to 13, wherein the determining the type of the video frame comprises:
detecting a distribution pattern of characters included in a plurality of video frames input over a predetermined time period through analysis of the plurality of video frames; and
determining whether the video frame corresponds to the OSD screen of the linear broadcast on a basis of a detected pattern.

15. The method of any one of claims 11 to 14, wherein the extracting the information on the video content extracts information on the video content from the one of the VOD UI screen and the OSD screen of the linear broadcast through OCR (Optical Character Recognition).
